# EUROPEAN PATENT SPECIFICATION

(11) **EP 1 291 596 B1**
(45) Date of publication and mention of the grant of the patent: **07.07.2010**
(21) Application number: 02016383.8
(22) Date of filing: 26.07.2002
(51) Int. Cl.: F25D 23/06, F16L 59/06

(54) **Refrigeration appliance with vacuum insulation**
Vakuumisoliertes Kühlgerät
Appareil frigorifique à isolation sous vide

(30) Priority: 06.09.2001 IT MI20011868
(43) Date of publication of application: 12.03.2003
(73) Proprietor: WHIRLPOOL CORPORATION, Benton Harbor Michigan 49022 (US)
(72) Inventor: Piloni, Mauro, Patent Dept., 21025 Comerio (IT); Martinella, Luigi, Patent Dept., 21025 Comerio (IT); Casoli, Fiorenzo, Patent Dept., 21025 Comerio (IT); Picozzi, Andrea, Patent Dept., 21025 Comerio (IT)
(74) Representative: Guerci, Alessandro

(56) References cited:
- EP-A- 0 658 716
- EP-A- 0 936 428
- WO-A-01/07848
- DE-C- 661 688
- DE-C- 956 899

## Description

The present invention relates to a domestic refrigeration appliance, such as a refrigerator, freezer or the like, provided with vacuum insulation, of the type conforming to the preamble of the accompanying main claim.

Such a refrigeration appliance is disclosed by DE 956899. Another similar appliance is disclosed by EP 0 936 428.

In known refrigeration appliances provided with vacuum insulation positioned between a vacuum-tight inner shell and a vacuum-tight outer shell, the two shells are joined together along their front contour (i.e. on that side containing the appliance door) by profile bars which are generally formed of several sections joined to each other and to the shells by welding. An example of such an appliance is described in US-A-6053594.

This known refrigeration appliance uses a multiplicity of sections (forming the profile bar) to be fixed between two shells, and support elements for these sections, these elements having themselves to be fixed to the two shells.

The main object of the present invention is to provide a refrigeration appliance, such as a refrigerator, freezer or the like, comprising inner and outer shells and vacuum insulation interposed between these shells, which is of simpler constructions as it does not require the use of profile connection bars between the shells to form the necessary vacuum seal for the insulation.

Another object of the present invention is to provide a refrigeration appliance of the stated type offering the further advantage of simplifying and improving the allocation of functional elements, such as the anti-condensation means, electric cables, permanent magnet strips (for door closure) and the like.

These and further objects which will be more apparent from the ensuing detailed description are attained by a refrigeration appliance in accordance with the technical teachings of the accompanying claims.

The invention will be better understood from the detailed description of preferred embodiments thereof given hereinafter by way of nonlimiting example and illustrated in the accompanying drawings, in which:
Figure 1 is a schematic vertical section through a first embodiment of a refrigeration appliance according to the invention;
Figure 2 is a section through a detail of the embodiment of Figure 1;
Figure 3 is a section (similar to that of Figure 2) through a variant of the invention; and
Figure 4 is a section (also similar to that of Figure 2) through another embodiment of the invention.

In the figures, the reference numeral 1 indicates the casing of a domestic refrigeration appliance, such as a refrigerator, freezer or the like. The casing 1 comprises a preservation compartment 2 bounded by a vacuum-tight continuous inner shell, for example of plastic material, obtained by vacuum forming. The inner shell can also be made of sheet metal. The casing 1 is bounded externally by a vacuum-tight continuous outer shell 4, spaced from the inner shell 3 and defining therewith an interspace occupied by heat insulating material 5 subjected to vacuum, for example open-cell polyurethane or polystyrene foam. A door P closes the preservation compartment 2.

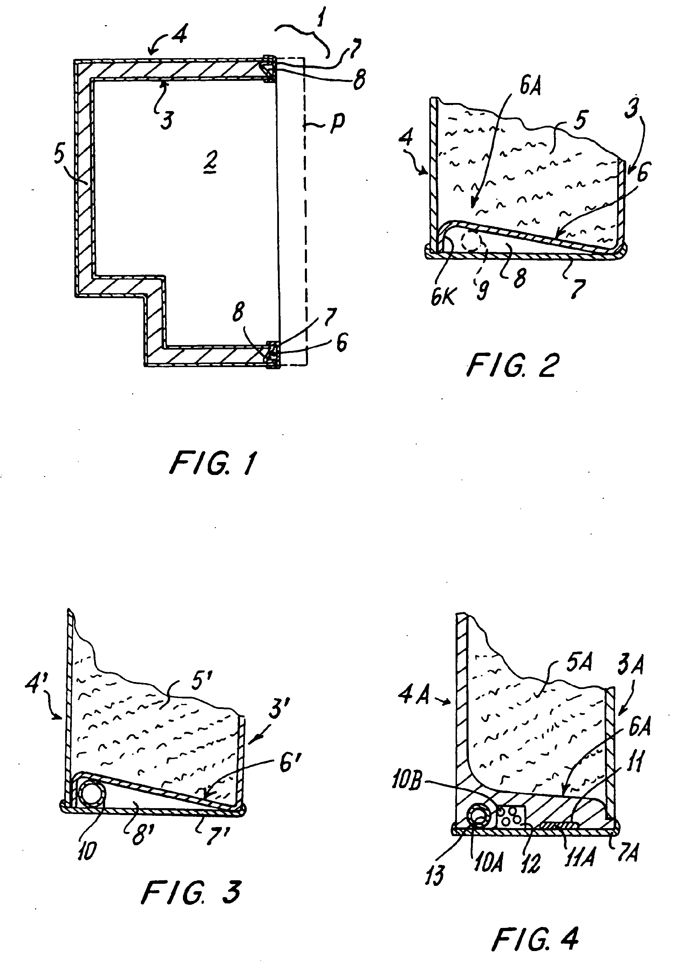

According to a first embodiment of the invention, shown in Figures 1 and 2, to achieve the frontal (i.e. towards the door) vacuum-tight closure of the interspace occupied by the heat-insulating material 5, the inner shell 3 is bounded peripherally and frontally by a flange-like extension 6 extending towards the outer shell 4 and having its free end welded (by laser or microplasma welding) to the end of the outer shell. The flange-like extension 6 is bent through a given angle towards the interspace occupied by the insulating material and terminates with an end 6K bent in the opposite direction parallel to that end of the outer shell 4 to which it is welded (Figures 1 and 2). By applying frontally, for example by slight forcing, a removable outer cover 7, for example of plastic or metal, a channel 8 is obtained between the cover and the flange-like extension 6 to be used to convey hot air originating from the condenser of the appliance refrigeration circuit, this condenser being positioned in the low part of the appliance. The hot air prevents condensation on the door side, enabling the so-called "hot loop" (shown by dashed and dotted lines and indicated by the reference numeral 9 in Figure 2) to be fed.

As shown in Figure 3, in which parts equal or corresponding to those of the preceding figures are indicated by the same reference numerals plus an apostrophe, the channel 8 can be used for the passage of electric cables 10, probes or the conventional hot loop, with an improvement in accessibility of everything relating to the repairability of the appliance.

In the embodiment of Figure 4, the flange-like extension, here indicated by 6A, is an integral part of the outer shell 4A (which in this case is of pressure-moulded plastic) and extends towards the inner shell 3A to which it is welded vacuum-tight at its end. The flange-like extension 6A comprises a seat 11 for a conventional magnetic strip 11A used to maintain the appliance door closed, and frontally open channels 12 and 13 in which to locate the hot loop 10A and electric cables 10B respectively. A removable plastic or metal cover 7A is again used in this embodiment.

As is apparent from the aforegoing description, according to the invention one of the component shells (the outer or the inner) of the refrigeration appliance has in correspondence with its front side (i.e. that towards the door) a shape such as to lie in intimate or close contact with the other shell to determine between the two shells a vacuum-tight weld which enables the vacuum within the insulating material to be maintained. The cover 7, 7A, which can be of plastic or metal, is suitably shaped to satisfy both aesthetic and functional requirements.

The proposed solution of the invention enables the hot loop, if used, to be positioned in the optimum position limiting the flow of heat towards the interior of the refrigeration appliance and instead favouring its conduction towards the outside where condensation phenomena occur.

The proposed solution of the invention also enables the hot loop to be dispensed with by using the channel 8 (Figure 2) to convey hot air taken from the underlying condenser of the refrigeration circuit of the refrigeration appliance and circulating totally about the cover to perform the function of the hot loop, i.e. to prevent condensate formation.

## Claims

1. A domestic refrigeration appliance, such as a refrigerator, freezer or the like, comprising a door and with vacuum heat insulation interposed between a substantially vacuum-tight inner shell and a substantially vacuum-tight outer shell, the two shells (3, 4, 3', 4'; 3A, 4A) being joined together vacuum-tight on that side towards the door (P) by means of a flange-like extension (6, 6', 6A) provided on the inner shell (3, 3') and welded vacuum-tight to the outer shell, **characterised in that** the flange-like extension (6. 6') presents a first portion bent towards the heat insulation (5) and an end portion (6K) adhering to and welded to the outer shell (4, 4'), a cover (7, 7', 7A) being provided removably connected, on the side towards the door (P), to the two shells (3, 4; 3', 4', 3A, 4A), said cover defining with the flange-like extension (6, 6', 6A) at least one channel (8; 8', 11, 12, 13).

2. An appliance as claimed in claim 1, wherein a hot loop (9, 10, 10A) extends within the channel (8; 13).

3. An appliance as claimed in claim 1, wherein the channel (8) is connected to the condenser of the appliance refrigeration circuit.

4. An appliance as claimed in claim 1, wherein several channels (11, 12, 13) are provided for the hot loop, for the magnetic strip and for electric cables respectively.

## Patentansprüche

1. Heim-Kühlvorrichtung, wie ein Kühlschrank, ein Gefrierfach oder ähnliches, umfassend eine Türe und mit einer zwischen einem im Wesentlichen vakuumdichten Innenmantel und einem im Wesentlichen vakuumdichten Außenmantel eingefügten Vakuum-Wärme-Isolierung, wobei die zwei Mäntel (3, 4, 3', 4', 3A, 4A) an derjenigen Seite in Richtung der Türe (P) mittels einem am Innenmantel (3, 3') vorgesehenen und mit dem Außenmantel vakuumdicht verschweißten flanschähnlichen Ansatzstück (6, 6', 6A) vakuumdicht verbunden sind,
**dadurch gekennzeichnet, dass** das flanschähnliche Ansatzstück (6, 6') einen in Richtung der Wärme-Isolierung (5) gebogenen ersten Abschnitt und einen am Außenmantel (4, 4') anliegenden und hierzu verschweißten Endabschnitt (6K) aufweist, wobei eine Abdeckung (7, 7', 7A) an der Seite in Richtung der Türe (P) mit den zwei Mänteln (3, 4, 3', 4', 3A, 4A) abnehmbar verbunden vorgesehen ist, wobei die Abdeckung mit dem flanschähnlichen Ansatzstück (6, 6', 6A) zumindest einen Kanal (8, 8', 11, 12, 13) definiert.

2. Vorrichtung gemäß Anspruch 1, bei der sich eine warme Schleife (9, 10, 10A) innerhalb des Kanals (8, 13) erstreckt.

3. Vorrichtung gemäß Anspruch 1, bei welcher der Kanal (8) mit dem Kondensator des Vorrichtungskühlkreises verbunden ist.

4. Vorrichtung gemäß Anspruch 1, bei der mehrere Kanäle (11, 12, 13) entsprechend für die warme Schleife, für den Magnetstreifen und für Elektrokabel vorgesehen sind.

## Revendications

1. Appareil de réfrigération domestique, comme un réfrigérateur, un congélateur ou autre, comprenant une porte et avec une isolation thermique par vide interposée entre une coque intérieure sensiblement étanche au vide et une coque extérieure sensiblement étanche au vide, les deux coques (3, 4, 3', 4'; 3A, 4A) étant jointes ensemble de manière étanche au vide sur ce côté vers la porte (P) au moyen d'une extension en rebord (6, 6', 6A) placée sur la coque intérieure (3, 3') et soudée de manière étanche au vide sur la coque extérieure, **caractérisé en ce que** l'extension en rebord (6, 6') présente une première partie courbée vers l'isolation thermique (5) et une partie d'extrémité (6K) adhérant sur et soudée sur la coque extérieure (4, 4'), un couvercle (7, 7', 7A) étant placé connecté de manière amovible, sur le côté vers la porte (P), aux deux coques (3, 4, 3', 4'; 3A, 4A), ledit couvercle définissant avec ladite extension en rebord (6, 6', 6A) au moins un canal (8; 8', 11, 12, 13).

2. Appareil selon la revendication 1, dans lequel une boucle chaude (9, 10, 10A) s'étend à l'intérieur du canal (8; 13).

3. Appareil selon la revendication 1, dans lequel le canal (8) est relié au condenseur du circuit de réfrigération de l'appareil.

4. Appareil selon la revendication 1, dans lequel plusieurs canaux (11, 12, 13) sont fournis respectivement pour la boucle chaude, pour la bande magnétique et pour des câbles électriques.
